# EUROPÄISCHE PATENTSCHRIFT

(11) **EP 3 272 630 B1**
(45) Veröffentlichungstag und Bekanntmachung des Hinweises auf die Patenterteilung: **29.04.2020**
(21) Anmeldenummer: 17188595.7
(22) Anmeldetag: 09.03.2012
(51) Int. Cl.: B62D 61/12, B60G 11/28, B60G 9/00, B60G 7/00

(54) **ACHSAUFHÄNGUNG FÜR EINE FAHRZEUGACHSE**
AXLE SUSPENSION FOR A VEHICLE AXLE
SUSPENSION D'ESSIEU POUR UN ESSIEU DE VÉHICULE

(30) Priorität: 21.03.2011 DE 102011001431
(43) Veröffentlichungstag der Anmeldung: 24.01.2018
(62) Teilanmeldung aus: 12721727.1
(73) Patentinhaber: BPW Bergische Achsen KG, 51674 Wiehl (DE)
(72) Erfinder: Schwarz, Michael, 51469 Bergisch-Gladbach (DE); Neumann, Arthur, 51597 Morsbach (DE); Gmeiner, Swen, 51709 Marienheide (DE); Michels, Manfred, 51067 Köln (DE); Luckau, Bianca, 53797 Lohmar (DE)
(74) Vertreter: Christophersen Patentanwälte

(56) Entgegenhaltungen:
- EP-A1- 1 661 739
- DE-A1-102006 044 598
- DE-U1- 20 317 350
- ES-U- 1 051 061

## Beschreibung

Die Erfindung betrifft eine Achsaufhängung für eine Fahrzeugachse nach dem Oberbegriff des Patentanspruchs 1. Siehe zu Beispiel DE102006044598.

Bei der Achsaufhängung einer luftgefederten Fahrzeugachse nach der EP 0 961 726 B1 dient als Kraftglied zum Anheben der Fahrzeugachse ein druckluftbetriebener Membranzylinder. Dieser stützt sich auf einer Konsole ab, die unter der Stütze der Fahrzeugachse angeordnet ist. Die Stütze nimmt in ihren beiden Seitenwänden einen Lagerbolzen auf, der die Schwenkachse für den jeweiligen Achslenker der Fahrzeugachse definiert. Um die beim Anheben der Achse erheblichen Kräfte auf die Stütze abzuleiten, übergreift die Konsole mit daran angeformten Schenkeln die Seitenwände der Stütze, wobei sich die Schenkel unter anderem gegen den Lagerbolzen abstützen. Daher wird ein Teil der beim Anheben der Fahrzeugachse wirkenden Kräfte auf diesen Bolzen und damit auf Teile der Achsaufhängung übertragen, die am dynamischen Fahrprozess beteiligt sind.

Aus der DE 699 17 105 T2 ist eine Achsaufhängung mit einem Achslift bekannt, bei dem sich das hier als Luftfeder gestaltete Kraftglied auf einer aus insgesamt drei Teilen zusammengesetzten Konsole abstützt. Ein erstes Konsolenteil, an dem sich das Kraftglied unmittelbar abstützt, ist mit einer Steckverbindung zum Eingriff im Bereich der Stirnwand der Stütze versehen. Bestandteile der Konsole sind ferner zu beiden Seiten der Stütze Aufhängungsplatten, deren untere Enden jeweils mit dem ersten Konsolenteil verschraubt sind und deren obere Enden an dem Schraubbolzen aufgehängt sind. Auch bei dieser Ausführungsform stützt sich daher der Achslift unter anderem auf jenem Lagerbolzen ab, welcher den Achslenker trägt, sodass zumindest ein Teil der beim Anheben der Fahrzeugachse wirkenden Kräfte auch auf diesen Bolzen und damit auf Teile der Achsaufhängung übertragen wird, die am dynamischen Fahrprozess beteiligt sind.

Eine Achsaufhängung und ein Achslift ohne diese Nachteile ist aus der DE 10 2006 044 598 A1 bekannt. Zur Erzielung einer über einen weiten Bereich verstellbaren Konsole ist diese zweiteilig aufgebaut, wobei ein erstes Konsolenteil ein quaderförmiges Druckstück ist, welches zwischen zwei Schenkeln des zweiten Konsolenteils verschraubt ist und sich von unten her an der Lenkerstütze abstützt. Ein zweites Konsolenteil ist über entsprechende Lochreihen in verschiedenen Stellungen mit sowohl dem ersten Konsolenteil als auch der Stütze verbindbar. Bei der Montage des Achslifts ist, um dessen Fehleinbau zu vermeiden, die Verwendung der richtigen, d. h. für die jeweilige Fahrwerksgeometrie passenden Lochpaarung zu beachten. Nach dem horizontalen Einfügen des ersten Konsolenteils müssen die Lochreihen des zweiten Konsolenteils mit den zwei Löchern der Seitenwände der Stütze in Deckung gebracht werden. Dabei kann es passieren, dass für die Verbindung ein falsches Loch gewählt wird, und dadurch das erste Konsolenteil nicht mehr im ausreichenden Eingriff mit der Stirnwand der Stütze steht. Es besteht die Gefahr, dass sich diese Verbindung später unter den Belastungen des Fahrbetriebs löst. Im Ergebnis würde der Achslift wegschwenken und seine Funktion verlieren, da die Hebekraft nicht mehr an der hierfür vorgesehenen Stelle angreift, im schlimmsten Fall kann sogar das zweite Konsolenteil abreißen.

Der Achslift nach der DE 10 2006 044 598 A1 arbeitet mit günstiger Ableitung der Druckreaktionskräfte, jedoch sind bis zum Abschluss der Montage des Achslifts mehrere Montageschritte erforderlich, unter anderem für das richtige Einstellen und Positionieren der beiden Konsolenteile.

Ziel der Erfindung ist daher, die Konsole des Achslifts mit wenigen Handgriffen in einer Grundeinstellung an der Stütze montieren zu können.

Zur Lösung dieser Aufgabe wird eine Achsaufhängung mit den Merkmalen des Patentanspruchs 1 vorgeschlagen.

Mit wenigen Handgriffen lässt sich die Konsole in einer Grundeinstellung, in der die Achshebekräfte sicher übertragen werden, an der Stütze befestigen. Die Verbindung erfolgt in zwei Bereichen mit einem Abstand zueinander. Als erstes Verbindungsmittel dient eine an dem Konsolenteil ausgebildete Steck- oder Hakenverbindung. Das weitere, hiervon beabstandete Verbindungsmittel kann zum Beispiel aus einer quer in dem Konsolenteil angeordneten Stange bestehen. Diese lässt sich für die Befestigung an der Stütze durch Öffnungen hindurchführen, die sich in den Seitenwänden der Stütze befinden.

Bei der Befestigung des Konsolenteils wird zunächst die Steck- oder Hakenverbindung in Eingriff mit der Stütze gebracht, wofür lediglich eine entsprechende Bewegung des Konsolenteils bis zum Eingriff erforderlich ist. Weitere Handgriffe, also z. B. ein Verschrauben, ein Fixieren eines Sicherungsrings etc. sind in Bezug auf diese erste Verbindung nicht erforderlich.

Erreicht wird eine belastbare Anordnung des Konsolenteils in einer eindeutig definierten und keine Alternative zulassenden Position. Für die Anordnung sind nur wenige Handgriffe notwendig, die zudem nur an dem einen dieser Orte anfallen, wohingegen die Verbindung an dem anderen Ort bereits durch ein einfaches Stecken oder Einhaken des Konsolenteils erreicht wird.

Von Vorteil ist die kräftemäßige Trennung des Achslifts von den am dynamischen Fahrprozess beteiligten Fahrwerkskomponenten, da die Abstützung der das Kraftglied des Achslifts aufnehmenden Konsole ausschließlich am Grundkörper der Stütze erfolgt, und nicht an solchen Teilen der Achsaufhängung, die am dynamischen Fahrprozess beteiligt sind. Vor allem wird vermieden, dass ein Teil der an der Konsole wirkenden, erheblichen Druckreaktionskräfte auf den Lagerbolzen übertragen wird, der den Achslenker schwenkbar mit der Stütze verbindet.

Während der einfach durchzuführenden Montage in der Grundeinstellung kann ein weiteres Konsolenteil, an dem sich das Kraftglied des Achslifts abstützt, bereits mit dem ersten Konsolenteil verbunden sein. Alternativ ist es aber auch möglich, das weitere Konsolenteil erst anschließend an dem ersten Konsolenteil zu befestigen.

Bei Nutzfahrzeugen, für die die Achsaufhängung in erster Linie Anwendung findet, erfordern unterschiedliche Fahrzeugtypen auch unterschiedliche Fahrhöhen. Unter der Fahrhöhe versteht der Fachmann den über das Ventil der Luftfeder gehaltenen Abstand zwischen der Unterseite des Fahrzeuglängsträgers, und dem Mittelpunkt der Achse. Im Programm eines Achsherstellers wird der gleiche Achslenker mit unterschiedlich hohen Stützen, Luftfederbälgen sowie unterschiedlich verkröpften Luftfederkonsolen kombiniert. Dadurch fällt auch der Schwenkbereich, also der minimale und der maximale Austrittswinkel des Lenkers aus der Stütze, von Fahrwerk zu Fahrwerk unterschiedlich aus. Mal liegt dieser Bereich höher, mal liegt er niedriger. Aufgrund dieser Gegebenheiten und für einen möglichst breiten Einsatzbereich muss auch der Achslift in seinen für die Funktion maßgeblichen Maßen anpassbar sein.

Um diese Anpassung durch eine entsprechende Anordnung des Kraftgliedes zu erzielen, wird mit einer Ausgestaltung vorgeschlagen, dass das zweite Konsolenteil in mindestens zwei unterschiedlichen Positionen an dem ersten Konsolenteil befestigbar ist. Hierzu kann Bestandteil des ersten Konsolenteils ein einstückiges Blechformteil sein, welches sich aus zwei parallelen Seitenschenkeln und einem diese miteinander verbindenden Stegabschnitte zusammensetzt, an dem die Steck- oder Hakenverbindung ausgebildet ist. Bei dieser Bauart sind die Seitenschenkel des ersten Konsolenteils jeweils mit einer Mehrzahl von Öffnungen für das wahlweise Hindurchstecken einer Verschraubung mit dem zweiten Konsolenteil versehen. Auf diese Weise lässt sich das den Membranzylinder aufnehmende zweite Konsolenteil zur Anpassung an die jeweils geforderte Geometrie des Achslifts in mindestens zwei unterschiedlichen Positionen an dem ersten Konsolenteil befestigen.

Mit einer weiteren Ausgestaltung wird vorgeschlagen, dass Bestandteil des zweiten Konsolenteils ein einstückiges Blechformteil ist, welches sich aus zwei parallelen Seitenschenkeln und einer diese miteinander verbindenden Querwand zusammensetzt, an der sich die Abstützung für das Kraftglied befindet, und dass die Seitenschenkel jeweils mit mindestens einer Öffnung zum Hindurchstecken der Verschraubung mit dem ersten Konsolenteil versehen sind.

Für eine günstige Einleitung der an der Konsole wirkenden Hebereaktionskräfte auf die Stütze wird ferner vorgeschlagen, dass die Oberseite des Stegabschnitts mit einer Stützfläche zur Anlage gegen die Unterseite der Stütze versehen ist.

Mit einer weiteren Ausgestaltung wird vorgeschlagen, dass die Steck- oder Hakenverbindung horizontal in die Stütze eingreifend ausgebildet ist, wobei das weitere Verbindungsmittel horizontal kein oder maximal ein Spiel aufweist, welches geringer ist als dieser horizontale Eingriff.

Die Einstellung des Achslifts an die jeweilige Fahrwerksgeometrie lässt sich alternativ oder zusätzlich auch am Achslenker dort vornehmen, wo beim Betrieb des Kraftgliedes dessen Hebekraft auf den Achslenker trifft, um diesen anzuheben. Mit weiteren Ausgestaltungen der Erfindung werden daher Maßnahmen vorgeschlagen, ein an dem Achslenker angeordnetes Kraftaufnahmeglied für die Hebekraft auf einfache Weise in mehr als nur einer Position montieren zu können.

Weitere Einzelheiten und Vorteile der Erfindung ergeben sich aus der nachfolgenden Beschreibung von Ausführungsbeispielen anhand der zugehörigen Zeichnungen. Darin zeigen:
- Figur 1: in einer perspektivischen, überwiegend seitlichen Darstellung Teile einer luftgefederten Achsaufhängung einschließlich einer Stütze sowie einem darin schwenkbar gelagerten Achslenker, jedoch ohne Darstellung der Achse selbst;
- Fig. 2a: den Bereich der Stütze und des daran befestigten Achslifts einschließlich eines darunter angeordneten, ersten Konsolenteils des Achslifts;
- Fig. 2b: die Gegenstände nach Fig. 2a mit zusätzlich befestigtem zweiten Konsolenteil;
- Fig. 3: in perspektivischer Darstellung das erste Konsolenteil;
- Fig. 4: eine zweite Ausführungsform eines Achslenkers mit einem daran in unterschiedlichen Positionen befestigbaren Kraftaufnahmeglied und
- Fig. 5: eine weitere Ausführungsform eines Achslenkers mit einem daran in unterschiedlichen Positionen befestigbaren Kraftaufnahmeglied.

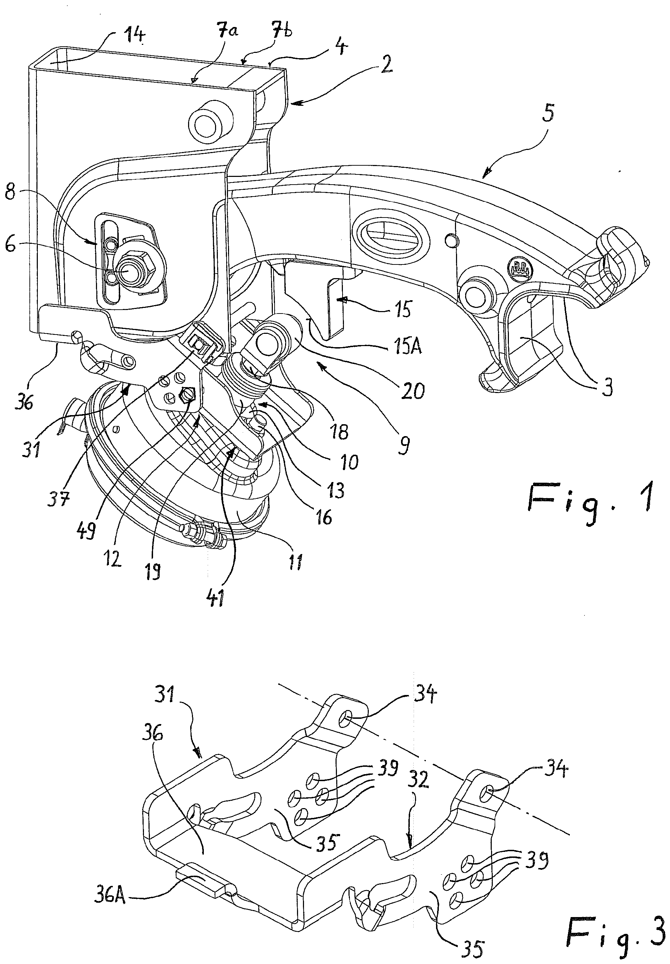

Die Fig. 1 zeigt die Achsaufhängung eines Lkw-Anhängers oder -Aufliegers. Unter dem Fahrzeugrahmen sind links und rechts jeweils Stützen 2 befestigt, vorzugsweise durch Verschweißen ihres oberen Randes 4 mit der Unterseite der Längsträger des Fahrzeugrahmens. In jeder Stütze 2 ist, schwenkbar um jeweils einen Bolzen 6, ein Achslenker bzw. Längslenker 5 für die Fahrzeugachse schwenkbar gelagert.

Jeder Achslenker bzw. Längslenker 5 ist als Gießteil aus Stahlguss oder Leichtmetallguss ausgebildet. Das vordere Ende jedes Achslenkers 5 ist als Auge gestaltet, in dem eine Gummibuchse oder eine Gummi-Stahl-Buchse sitzt. Durch diese sowie durch die Seitenwände 7a, 7b der Stütze 2 hindurch erstreckt sich der Bolzen 6. An dem rückwärtigen Ende der Achslenker 5 sind jeweils, was die Zeichnung nicht zeigt, Luftfederbälge einer in üblicher Weise gestalteten Luftfederung befestigt. Üblicherweise stützen sich derartige Luftfederbälge von unten gegen den Fahrzeugrahmen ab.

Jeder Achslenker 5 ist in einer Achsaufnahme 3 mit dem Achskörper der Fahrzeugachse verbunden. Der Achskörper, vorzugsweise ein Achsrohr, ist von der linken bis zur rechten Fahrzeugseite durchgehend gestaltet und trägt an seinen beiden Enden die Radlagerungen der Fahrzeugräder.

Zur Einstellung der Spur und des Vorlaufs der Fahrzeugachse sind die Stützen 2 mit Justiervorrichtungen 8 versehen.

Der Grundkörper der Stütze 2 ist im Querschnitt U-förmig gestaltet und setzt sich aus den beiden zueinander im Wesentlichen parallelen Seitenwänden 7a, 7b und einer nach vorne in Fahrtrichtung weisenden Stirnwand 14 zusammen. Nach hinten und nach unten hin ist der Grundkörper der Stütze 2 offen. Er kann in fertigungstechnisch vorteilhafter Ausgestaltung einteilig gestaltet sein, indem alle seine Wände, also die beiden Seitenwände 7a, 7b und die vordere Stirnwand 14, Abschnitte ein- und desselben Blechstreifens sind. Dieser Blechstreifen aus z. B. Stahlblech wird in einem Kaltumformprozess, z. B. in einem Stanz- oder Stanz-Biege-Prozess zu dem auf der Zeichnung wiedergegebenen Blechformteil umgestaltet. Denkbar ist auch eine aus Gussmaterial hergestellte Stütze.

Die Seitenwände 7a, 7b sind mit Löchern versehen. Durch diese Löcher sowie durch das vordere Auge des Achslenkers 5 führt der Bolzen 6 hindurch, und bildet so die Schwenkachse für den Achslenker.

Um die in Fig. 1 in der Fahrstellung dargestellte luftgefederte Fahrzeugachse, falls diese für den Fahrbetrieb nicht benötigt wird, in ihre angehobene Stellung zu heben, ist ein Achslift mit einer unter der Stütze 2 angeordneten Hebevorrichtung 9 vorgesehen. Bestandteil der Hebevorrichtung 9 ist ein mit Druckluft betriebener Membranzylinder 11, der mittels einer Konsole 12, deren Einzelteile im Folgenden noch näher erläutert werden, starr an der Stütze 2 angeordnet ist. Die Konsole 12 ist mit einer Abstützung 10 zur Befestigung des Membranzylinders 11 versehen. Bestandteile der Abstützung 10 sind zu beiden Seiten einer Öffnung 13 an der Konsole angeordnete Schrauben 16, die den Membranzylinder starr an der Konsole 12 befestigen.

Der Achslenker 5 der Achsaufhängung ist an seiner Unterseite mit einem Kraftaufnahmeglied 15 versehen, an dem zur Aufnahme der Hebekraft eine Abrollfläche 15A ausgebildet ist. Das Kraftaufnahmeglied 15 ist hier blockförmig gestaltet. Es ist mit einem Haken von unten her in eine Öffnung des Achslenkers eingehängt, und zugleich mit einer Schraube gesichert.

Der Membranzylinder 11 ist das Kraftglied des Achslifts. Sein Gehäuse ist mit Hilfe der Verschraubungen 16 starr an der Konsole 12 abstützt. Hierbei ragt ein Teil des Membranzylinders 11 durch eine Öffnung 13 in der Konsole nach schräg oben. In diesem Bereich befindet sich eine Axialführung 19 für eine aus dem Membranzylinder 11 heraus führende, durch das Druckmittel im Membranzylinder angetriebene Kolbenstange 18. Bei der Axialführung 19 handelt es sich um eine Kunststoffbuchse, welche die Kolbenstange 18 auf einem gewissen Teil ihrer Länge axial führt. An ihrem Ende ist die Kolbenstange 18 mit einer wälzgelagerten Rolle 20 versehen.

Bei Betätigung des Kraftglieds 11 mittels Druckluft kommt es durch die gemeinsam eine Druckübertragung bildende Einheit aus Kolbenstange 18 und Rolle 20 zu einer nach schräg oben gerichteten Druckkraft gegen das gegenüberliegende Kraftaufnahmeglied 15 an dem Achslenker 5. Dadurch wird der Achslenker 5 um den Bolzen 6 nach oben geschwenkt, und die Achse angehoben.

Außerhalb des Achsliftbetriebs ist die aus Kolbenstange und Rolle zusammengesetzte Druckübertragung 18, 20 in Richtung zum Membranzylinder 11 zurückgezogen, wodurch die Rolle 20 keinerlei Kontakt zu dem Kraftaufnahmeglied 15 hat und sich der Achslenker 5 frei entsprechend den Fahrbedingungen bewegen kann.

Die Abrollfläche 15A an dem hier blockförmigen Kraftaufnahmeglied 15 ist als zu der Rolle 20 hin konkav gekrümmte Evolvente gestaltet. Der Verlauf der Evolvente ist dergestalt, dass die Flächennormale jenes Ortes, an dem die Rolle 20 an der Abrollfläche 15A anliegt, exakt mit der Längsachse der Kolbenstange 18 zusammenfällt. Durch diese Ausrichtung und geometrische Gestaltung der beteiligten Bauteile wird erreicht, dass keine oder allenfalls sehr geringe Querkräfte auf die Rolle 20 und damit auf die Kolbenstange 18 ausgeübt werden. Gleichwohl kann es sinnvoll sein, die Kolbenstange 18 axial zu führen, wozu nahe dem Austritt der Kolbenstange 18 aus dem Gehäuse des Membranzylinders 11 die Axialführung 19 an dem Gehäuse des Membranzylinders befestigt ist.

Die Konsole 12 des Achslifts ist zweiteilig ausgebildet. Sie besteht im Wesentlichen aus einem ersten Konsolenteil 31 und einem zweiten Konsolenteil 41. Das erste Konsolenteil 31 ist in nicht veränderbarer Stellung unmittelbar an der Stütze 2 befestigt, und überträgt die mit dem Anheben verbundenen Reaktionskräfte auf diese. Hingegen ist das zweite Konsolenteil, an dem sich die Abstützung 10 des Membranzylinders 11 und damit des Kraftgliedes des Achslifts befindet, an dem ersten Konsolenteil 31 befestigt, und damit nur mittelbar an der Stütze.

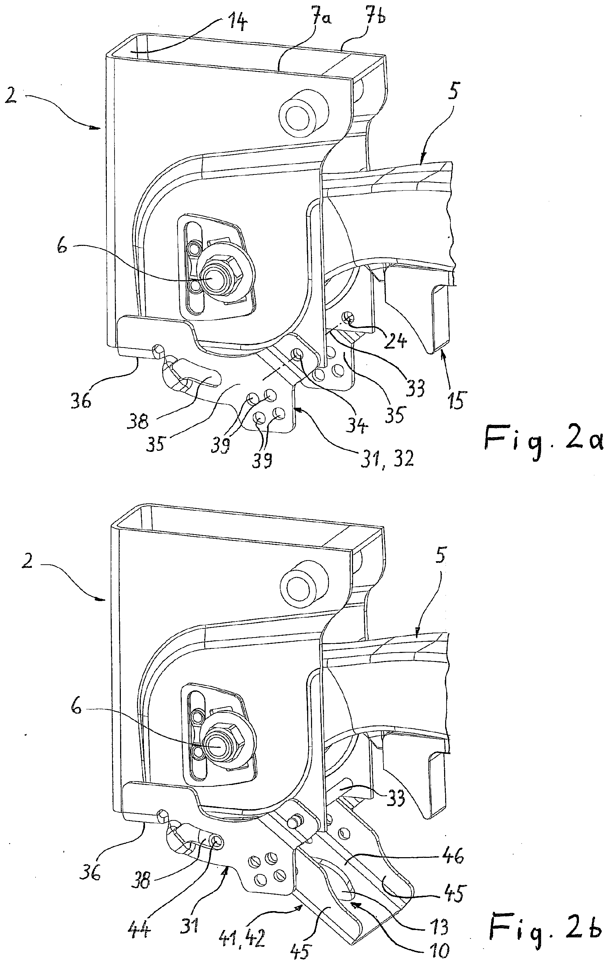

Der Aufbau und die Befestigung der Konsolenteile werden im Folgenden anhand der Figuren 2a, 2b und 3 näher erläutert.

Das erste Konsolenteil 31 besteht im Wesentlichen aus einem Blechformteil 32 und einer in Fig. 2a nur anhand ihrer Mittellinie angedeuteten, axial gesicherten Stange 33. Das Konsolenteil 31 ist an zwei horizontal zueinander beabstandeten Orten mit der Stütze 2 verbunden. Als in Fahrtrichtung vordere Verbindung dient eine Steckverbindung oder Hakenverbindung 36A zum Eingriff in die Stirnwand 14 der Stütze. Die Verbindung 36A ist so geformt, dass sie durch einfachen Formschluss in eine korrespondierend geformte Struktur in der Stütze 2, und zwar hier in eine Öffnung im unteren Bereich der Stirnwand 14 der Stütze, eingreift.

Das Blechformteil 32 des Konsolenteils 31 setzt sich aus zwei im montierten Zustand außen an den Seitenwänden 7a, 7b der Stütze angeordneten Seitenschenkeln 35, und aus einem diese verbindenden Stegabschnitt 36 zusammen. An dem Stegabschnitt 36 befindet sich die horizontal in die Öffnung in der Stütze 2 eingreifende Steck- oder Hakenverbindung 36A.

Der Stegabschnitt 36 erstreckt sich quer unter der Stütze 2 hindurch, wobei seine Oberseite als Stützfläche dient, die sich von unten her gegen die Stütze 2 abstützt, und so den größten Anteil der beim Anheben der Achse entstehenden Druckreaktionskräfte auf direktem Wege in die Stütze 2 ableitet. Alternativ können die Druckreaktionskräfte auch ausschließlich oder überwiegend über die Steck- und Hakenverbindung 36A und/oder über die andere, hierzu beabstandete Verbindung in die Stütze 2 eingeleitet werden.

Am rückwärtigen Ende des Blechformteils 32 sind dessen Seitenschenkel 35 mit jeweils einer Bohrung 34 versehen, welche zu der Bohrung 34 in dem jeweils anderen Seitenschenkel 35 fluchtet. Die Bohrungen 34 sind so angeordnet, dass sie bei montiertem Konsolenteil 31 mit Bohrungen 24 in den Seitenwänden 7a, 7b der Stütze 2 fluchten. Die Stange 33, welche Bestandteil des Konsolenteils 31 ist, ist durch diese insgesamt vier Bohrungen 24, 34 hindurchgeführt und axial gesichert. Zur axialen Sicherung ist die Stange 33 an ihrem einen Ende mit einem erweiterten Kopf, und an ihrem anderen Ende mit einer Ringnut versehen, auf die ein Sicherungsclip 37 (Fig. 1) aufsteckbar ist.

Die Befestigung des ersten Konsolenteils 31 an der Stütze 2 erfolgt, indem das Konsolenteil nach vorne bewegt wird, bis die vorne daran ausgebildete Steck- und Hakenverbindung 36A in die Öffnung in der Stirnwand 14 der Stütze 2 gelangt. Sodann werden, etwa durch leichtes Anheben des Blechformteils 32, dessen Bohrungen 34 mit den Bohrungen 24 der Stütze in Deckung gebracht, die Stange 33 hindurchgeführt und mittels des Sicherungsclips 37 axial gesichert. Die vorderen Verbindungsmittel in Gestalt der Steck- oder Hakenverbindung können sich dann nicht mehr lösen, da die zu den vorderen Verbindungsmitteln horizontal beabstandeten hinteren Verbindungsmittel in Gestalt der Stange 33 dies verhindern. Hierzu ist eine entsprechend geringe Toleranz der Stange 33 und der Bohrungen 24, 34 erforderlich. Das dort mögliche Horizontalspiel ist geringer, als der horizontale Eingriff der Steck- bzw. Hakenverbindung 36A vorne an dem Konsolenteil 31.

Alternativ kann die Steck- und Hakenverbindung auch in den Seitenwänden 7a, 7b der Stütze 2 erfolgen. Ebenfalls denkbar ist, dass die andere, im Abstand angeordnete Verbindung nur der Sicherung mehrerer Steck- oder Hakenverbindungen dient, und keine die Konsole tragende Funktion übernimmt.

Gemäß Fig. 2b besteht auch das andere Konsolenteil 41 im Wesentlichen aus einem einstückigen Blechformteil 42, welches sich aus zwei zueinander parallelen Seitenschenkeln 45 und einer diese miteinander verbindenden Querwand 36 zusammensetzt, wobei sich der Membranzylinder 11 mittels der Verschraubungen 16 an dieser Querwand 46 abstützt.

Um das zweite Konsolenteil 41 in Bezug auf das erste Konsolenteil 31 einzustellen, sind die Seitenschenkel 35 jeweils mit einem Lochbild versehen. Durch dessen Löcher 39 sind wahlweise Schrauben 49 (Fig. 1) hindurchsteckbar, um so das zweite Konsolenteil in einer bestimmten, aus mehreren wahlweise zur Verfügung stehenden Stellungen am ersten Konsolenteil befestigen zu können und den Bewegungsweg des Achslifts an die jeweilige Fahrwerksgeometrie anzupassen.

Bestandteil des zweiten Konsolenteils 41 sind an beiden Seitenschenkeln 45 als Zapfen dienende Durchstellungen 44, welche stets in ein Langloch 38 in dem jeweiligen Seitenschenkel 35 des ersten Konsolenteils 31 eingreifen. Die Langlöcher 38 sind nicht gerade, sondern folgen einem Kreisbogen, dessen Bezugsmittelpunkt ungefähr mit dem Bolzen 6 zusammenfällt.

Die Einstellung des Achslifts kann nachträglich bzw. individuell durch den Fahrzeugbauer erfolgen, nachdem das erste Konsolenteil 31 zunächst in seiner nicht veränderbaren Grundstellung an der Stütze 2 montiert wurde. Alternativ besteht die Möglichkeit, schon vor der Anbringung des Achslifts an der Stütze die beiden Konsolenteile 31, 41 in einer bestimmten Relativstellung zu verbinden, die für den jeweiligen Fahrwerkstyp passend ist. Die so vorbereitete Konsole aus den beiden Konsolenteilen 31, 41 wird dann als Einheit unter der Stütze 2 befestigt, ohne dass es dabei noch zu einer versehentlichen Fehlmontage kommen kann.

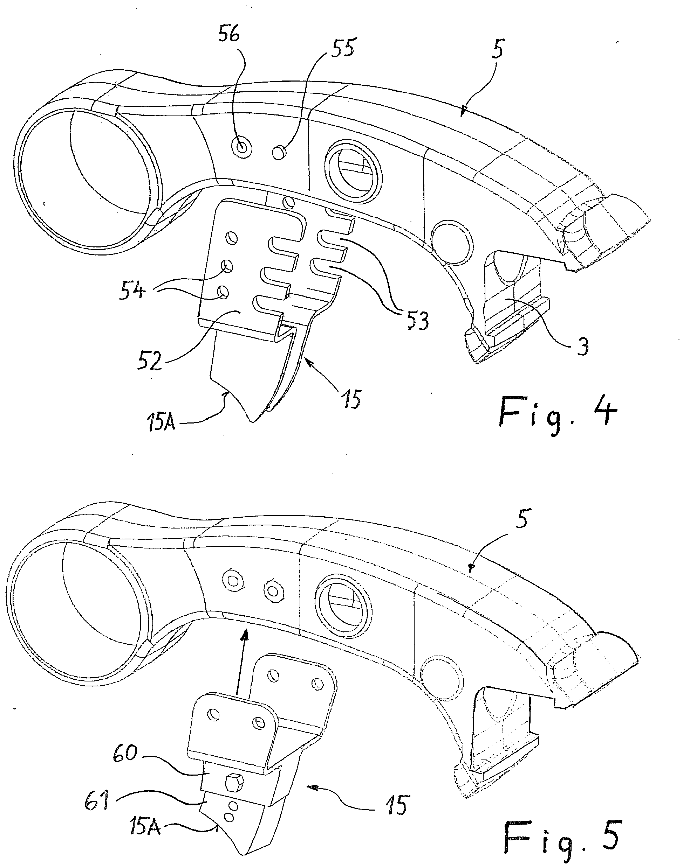

Die Anpassung des Achslifts und vor allem dessen Bewegungswegs an die jeweilige Fahrwerksgeometrie kann jedoch auch auf Seiten des Achslenkers erfolgen, was die Fign. 4 und 5 in zwei unterschiedlichen Ausführungsformen illustrieren.

Gemäß Fig. 4 ist das unter dem Achslenker 5 angeordnete Kraftaufnahmeglied 15 zu beiden Seiten des Achslenkers 5 mit jeweils einem Schenkel 52 versehen. Dieser weist Strukturen auf, die eine Montage in unterschiedlichen Höhen zulassen, hier drei unterschiedlichen Höhen. Die Strukturen bestehen in einseitig offenen Schlitzen 53 sowie Bohrungen 54 in den Schenkeln 52. Diese sind wahlweise mit einem entsprechenden Zapfen 55 bzw. einer Bohrung 56 des Achslenkers 5 verbindbar, um so die Position der an dem Kraftaufnahmeglied 15 ausgebildeten Abrollfläche 15A so einzustellen, dass sich beim Betrieb des Achslifts eine Fluchtung zu der aus Kolbenstange 18 und Rolle 20 bestehenden Druckübertragung einstellt. Das Kraftaufnahmeglied 15 ist also immer in Verlängerung zu der Wirkrichtung des Kraftglieds 11 angeordnet.

Bei der Ausführungsform nach Fig. 5 ist das Kraftaufnahmeglied 15 zweiteilig aufgebaut aus einem mit dem Achslenker 5 nur in einer Position verschraubbaren Grundelement 60, und einem in Bezug auf das Grundelement 60 in mehreren Stellungen einstellbaren Block 61, an dem die Abrollfläche 15A ausgebildet ist.

### Bezugszeichenliste

- 2: Stütze
- 3: Achsaufnahme
- 4: Rand
- 5: Achslenker (Längslenker)
- 6: Bolzen
- 7a: Seitenwand
- 7b: Seitenwand
- 8: Justiervorrichtung
- 9: Hebevorrichtung
- 10: Abstützung
- 11: Kraftglied, Membranzylinder
- 12: Konsole
- 13: Öffnung
- 14: Stirnwand
- 15: Kraftaufnahmeglied
- 15A: Abrollfläche
- 16: Schraube
- 18: Kolbenstange
- 19: Axialführung der Kolbenstange
- 20: Rolle
- 24: Bohrung
- 31: erstes Konsolenteil
- 32: Blechformteil
- 33: Stange
- 34: Bohrung
- 35: Seitenschenkel
- 36: Stegabschnitt
- 36A: Steck- bzw. Hakenverbindung
- 37: Sicherungsclilp
- 38: Langloch
- 39: Lochbild
- 41: zweites Konsolenteil
- 42: Blechformteil
- 44: Durchstellungen
- 45: Seitenschenkel
- 46: Querwand
- 49: Schraube
- 52: Schenkel
- 53: Schlitz
- 54: Bohrung
- 55: Zapfen
- 56: Bohrung
- 60: Grundelement
- 61: Block

## Patentansprüche

1. Achsaufhängung für eine längslenkergeführte Fahrzeugachse, mit einer auf jeder Fahrzeugseite unter einem Fahrzeugchassis befestigbaren Stütze (2), in der jeweils ein Längslenker (5) drehbar befestigt ist, welcher sich mit seinem anderen Ende über eine Luftfeder gegenüber dem Fahrzeugchassis abgestützt ist, mit einer die Längslenker (5) kreuzenden Fahrzeugachse, an deren Ende die Fahrzeugräder aufgenommen sind, und mit mindestens einem Achslift mit einem Kraftglied (11), einer durch Betätigung des Kraftglieds (11) gegen den Längslenker (5) beweglichen Druckübertragung (18, 20), sowie einer Konsole (12), welche mit einer Abstützung (10) für das Kraftglied (11) und die an ihm wirkenden Druckreaktionskräfte, und welche außerdem zur Befestigung an der Stütze (2) mit einem Konsolenteil (31) versehen ist, an dem eine Steck- oder Hakenverbindung (36A) zum Eingriff in die Stütze (2) ausgebildet ist, **dadurch gekennzeichnet, dass** das Konsolenteil (31) nur in einer einzigen Position gegenüber der Stütze (2) anbringbar ist, dass das Konsolenteil (31) ein erstes Konsolenteil der Konsole (12) ist, dass ein zweites Konsolenteil (41) der Konsole an dem ersten Konsolenteil (31) befestigbar ist, und dass sich das Kraftglied (11) an dem zweiten Konsolenteil (41) abstützt.

2. Achsaufhängung nach Anspruch 1, **dadurch gekennzeichnet, dass** das zweite Konsolenteil (41) in mindestens zwei unterschiedlichen Positionen an dem ersten Konsolenteil (31) befestigbar ist.

3. Achsaufhängung nach Anspruch 2, **dadurch gekennzeichnet, dass** Bestandteil des ersten Konsolenteils (31) ein einstückiges Blechformteil (32) ist, welches sich aus zwei parallelen Seitenschenkeln (35) und einem diese miteinander verbindenden Stegabschnitt (36) zusammensetzt, an dem die Steck- oder Hakenverbindung (36A) ausgebildet ist, und dass die Seitenschenkel (35) jeweils mit einer Mehrzahl von Öffnungen für das wahlweise Hindurchstecken einer Verschraubung mit dem zweiten Konsolenteil (41) versehen sind.

4. Achsaufhängung nach Anspruch 3, **dadurch gekennzeichnet, dass** Bestandteil des zweiten Konsolenteils (41) ein einstückiges Blechformteil (42) ist, welches sich aus zwei parallelen Seitenschenkeln (45) und einer diese miteinander verbindenden Querwand (46) zusammensetzt, an der sich die Abstützung (10) für das Kraftglied (11) befindet, und dass die Seitenschenkel (45) jeweils mit mindestens einer Öffnung zum Hindurchstecken der Verschraubung mit dem ersten Konsolenteil (31) versehen sind.

5. Achsaufhängung nach Anspruch 3 oder 4, **dadurch gekennzeichnet, dass** die Oberseite des Stegabschnitts (36) mit einer Stützfläche zur Anlage gegen die Unterseite der Stütze versehen ist.

6. Achsaufhängung nach einem der Ansprüche 1 bis 5, **dadurch gekennzeichnet, dass** das Konsolenteil (31) beabstandet zu seiner Steck- oder Hakenverbindung (36A) mit mindestens einem weiteren Verbindungsmittel (33) versehen ist, das zum Eingriff in die Stütze ausgebildet ist, dass die Steck- oder Hakenverbindung (36A) horizontal eingreifend ausgebildet ist, und dass das weitere Verbindungsmittel (33) horizontal kein oder maximal ein Spiel aufweist, welches geringer ist als dieser horizontale Eingriff.

7. Achsaufhängung nach einem der Ansprüche 1 bis 6, **gekennzeichnet durch** ein in Verlängerung zu der Wirkrichtung des Kraftgliedes (11) an dem Längslenker (5) befestigbares Kraftaufnahmeglied (15).

8. Achsaufhängung nach Anspruch 7, **gekennzeichnet durch** an dem Kraftaufnahmeglied (15) ausgebildete Verbindungsmittel (53 - 56), mit denen das Kraftaufnahmeglied (15) in mindestens zwei unterschiedlichen Positionen an dem Längslenker (5) befestigbar ist.

## Claims

1. Axle suspension system for a vehicle axle which is guided by trailing arm, with a support (2) which can be fastened below a vehicle chassis on each vehicle side and in which in each case one trailing arm (5) is mounted rotatably, which trailing arm (5) is supported with its other end via an air spring with respect to the vehicle chassis, with a vehicle axle which crosses the trailing arms (5) and at the end of which the vehicle wheels are received, and with at least one axle lift with a force element (11), a pressure transmission means (18, 20) which can be moved with respect to the trailing arm (5) by way of actuation of the force element (11), and a bracket (12) which is provided with a support (10) for the force element (11) and the pressure reaction forces which act on it, and which, moreover, is provided with a bracket part (31) for fastening to the support (2), on which bracket part (31) a plug-in or hook connection (36A) is configured for engagement into the support (2), **characterized in that** the bracket part (31) can be attached only in a single position with respect to the support (2), **in that** the bracket part (31) is a first bracket part of the bracket (12), **in that** a second bracket part (41) of the bracket can be fastened to the first bracket part (31), and **in that** the force element (11) is supported on the second bracket part (41).

2. Axle suspension system according to Claim 1, **characterized in that** the second bracket part (41) can be fastened to the first bracket part (31) in at least two different positions.

3. Axle suspension system according to Claim 2, **characterized in that** a constituent part of the first bracket part (31) is a single-piece shaped sheet-metal part (32) which is composed of two parallel side limbs (35) and a web section (36) which connects the former to one another and on which the plug-in or hook connection (36A) is configured, and **in that** the side limbs (35) are provided in each case with a plurality of openings for selectively plugging through a screw connection to the second bracket part (41).

4. Axle suspension system according to Claim 3, **characterized in that** a constituent part of the second bracket part (41) is a single-piece shaped sheet-metal part (42) which is composed of two parallel side limbs (45) and a transverse wall (46) which connects the former to one another and on which the support (10) for the force element (11) is situated, and **in that** the side limbs (45) are provided in each case with at least one opening for plugging through the screw connection to the first bracket part (31).

5. Axle suspension system according to Claim 3 or 4, **characterized in that** the upper side of the web section (36) is provided with a supporting face for bearing against the lower side of the support.

6. Axle suspension system according to one of Claims 1 to 5, **characterized in that**, spaced apart from its plug-in or hook connection (36A), the bracket part (31) is provided with at least one further connecting means (33) which is configured for engagement into the support, **in that** the plug-in or hook connection (36A) is configured so as to engage horizontally, and **in that** the further connecting means (33) does not have any play horizontally or at most has a play which is smaller than the said horizontal engagement.

7. Axle suspension system according to one of Claims 1 to 6, **characterized by** a force absorption element (15) which can be fastened to the trailing arm (5) in an extension to the direction of action of the force element (11) .

8. Axle suspension system according to Claim 7, **characterized by** connecting means (53-56) which are configured on the force absorption element (15) and by way of which the force absorption element (15) can be fastened to the trailing arm (5) in at least two different positions.

## Revendications

1. Suspension d'essieu pour un essieu de véhicule guidé par des bras oscillants longitudinaux, comprenant un support (2) pouvant être fixé sous un châssis de véhicule de chaque côté du véhicule, support dans lequel est fixé de manière rotative respectivement un bras oscillant longitudinal (5), lequel est supporté par rapport au châssis de véhicule par le biais d'un ressort pneumatique par son autre extrémité, un essieu de véhicule croisant les bras oscillants longitudinaux (5), essieu aux extrémités duquel les roues de véhicule sont reçues, et au moins un dispositif de soulèvement d'essieu doté d'un organe de force (11), d'une transmission de pression (18, 20) mobile par actionnement de l'organe de force (11) contre le bras oscillant longitudinal (5), ainsi que d'une console (12), laquelle est dotée d'un appui (10) pour l'organe de force (11) et les forces de réaction à la pression agissant sur celui-ci, et laquelle est en outre dotée d'une partie de console (31) pour la fixation au support (2), partie de console sur laquelle est réalisée une liaison enfichable ou à crochet (36A) destinée à s'emboîter dans le support (2), **caractérisée en ce que** la partie de console (31) ne peut être installée que dans une position unique par rapport au support (2), **en ce que** la partie de console (31) est une première partie de la console (12), **en ce qu'**une deuxième partie (41) de la console peut être fixée à la première partie de console (31), et **en ce que** l'organe de force (11) est supporté sur la deuxième partie de console (41).

2. Suspension d'essieu selon la revendication 1, **caractérisée en ce que** la deuxième partie de console (41) peut être fixée à la première partie de console (31) dans au moins deux positions différentes.

3. Suspension d'essieu selon la revendication 2, **caractérisée en ce qu'**une partie formée en tôle (32) d'une seule pièce fait partie de la première partie de console (31), laquelle partie formée en tôle est constituée de deux branches latérales parallèles (35) et d'une partie jointive (36) reliant celles-ci l'une à l'autre, sur laquelle la liaison enfichable ou à crochet (36A) est réalisée, et **en ce que** les branches latérales (35) sont munies respectivement d'une pluralité d'ouvertures pour l'insertion sélective d'une liaison vissée avec la deuxième partie de console (41).

4. Suspension d'essieu selon la revendication 3, **caractérisée en ce qu'**une partie formée en tôle (42) d'une seule pièce fait partie de la deuxième partie de console (41), laquelle partie formée en tôle est constituée de deux branches latérales parallèles (45) et d'une paroi transversale (46) reliant celles-ci l'une à l'autre, sur laquelle se trouve l'appui (10) pour l'organe de force (11), et **en ce que** les branches latérales (45) sont munies respectivement d'au moins une ouverture pour l'insertion de la liaison vissée avec la première partie de console (31).

5. Suspension d'essieu selon la revendication 3 ou 4, **caractérisée en ce que** le côté supérieur de la partie jointive (36) est muni d'une surface d'appui pour l'appui contre le côté inférieur du support.

6. Suspension d'essieu selon l'une des revendications 1 à 5, **caractérisée en ce que** la partie de console (31) est munie, à distance de sa liaison enfichable ou à crochet (36A), d'au moins d'un autre moyen de liaison (33), qui est conçu pour s'emboîter dans le support, **en ce que** la liaison enfichable ou à crochet (36A) est conçue de manière à s'emboîter horizontalement, et **en ce que** l'autre moyen de liaison (33) ne présente horizontalement aucun jeu ou au maximum un jeu qui est inférieur à cet emboîtement horizontal.

7. Suspension d'essieu selon l'une des revendications 1 à 6, **caractérisée par** un organe d'absorption de force (15) pouvant être fixé au bras oscillant longitudinal (5) dans le prolongement de la direction d'action de l'organe de force (11).

8. Suspension d'essieu selon la revendication 7, **caractérisée par** des moyens de liaison (53-56) réalisés sur l'organe d'absorption de force (15), à l'aide desquels l'organe d'absorption de force (15) peut être fixé au bras oscillant longitudinal (5) dans au moins deux positions différentes.
